# EUROPEAN PATENT APPLICATION

(11) **EP 2 808 832 A1**
(43) Date of publication of application: **03.12.2014**
(21) Application number: 14170368.6
(22) Date of filing: 28.05.2014
(51) Int. Cl.: G06Q 10/00, G06Q 50/30

(54) **Iterative public transit scoring**

(30) Priority: 29.05.2013 US 201313905026
(71) Applicant: Google Inc., Mountain View, CA 94043 (US)
(72) Inventor: Viger, Fabien, 75002 Paris (FR); Haim, Noam Ben, 8002 Zurich (CH)
(74) Representative: Epping - Hermann - Fischer

(57) **Abstract**

Computer-implemented methods for scoring and ranking transit stops and transit lines are provided. In one aspect, a method includes determining data and factors associated with a first transit stop or line and calculating a score for the first transit stop or line. The data and factors used in the scoring calculation may be a combination of the number of vehicle departures from the transit stop, the number of transit lines connected to the transit stop, a point of interest proximity factor, a population center factor, the number of trips on the transit line, the number of transit stops on the transit line, the number of interconnected transit lines and the travel distance of the transit line. The transit stop and transit lines scores may be iterated over each other. Systems and machine-readable media for scoring and ranking transit stops and transit lines are also provided.

## Description

### CROSS-REFERENCE TO RELATED APPLICATIONS

This application claims priority to "ITERATIVE PUBLIC TRANSIT SCORING," U.S. Application No. 13/905,026, filed May 29, 2013, and is related to the following U.S. utility applications filed on the same day by the same inventors: "PUBLIC TRANSIT STOP SCORING," U.S. Application No. 13/905,020, filed May 29, 2013; and "PUBLIC TRANSIT LINE SCORING," U.S. Application No. 13/905,002, filed May 29, 2013. The content of each of these applications is incorporated herein by reference.

### BACKGROUND

The present disclosure generally relates to public transit systems, and more particularly to scoring public transit stops and/or public transit lines in the systems.

Applications such as trip planners, map generators and search engines may provide information about public transit systems. The transit system information may be provided to a user in response to a user query, for example. Various transit entities, such as transit stops, transit stations, transit lines, routes or patterns, may be ordered or ranked by scores to improve the relevance of information provided to the user. The information may be provided in association with a particular point of interest (POI), such as a restaurant, a store, a landmark or a theater, for example.

### SUMMARY

According to one embodiment of the disclosure, a computer-implemented method for iteratively scoring transit stops and transit lines is provided. The method includes initializing a set of transit stop scores, wherein each transit stop score in the set depends on a number of departures from the transit stop over a period of time and a set of transit line scores for a respective set of transit lines that service the transit line stop. The method also includes initializing a set of transit line scores, wherein each transit line score in the set depends on a number of trips on the transit line over the period of time, and a set of transit stop scores for a respective set of transit stops that are serviced by the transit line. The method further includes iteratively refining the set of transit stop scores and the set of transit line scores until for any given transit stop score or transit line score at least one of a maximum number of iterations has occurred or a change in the given transit stop score or transit line score between successive iterations is less than a threshold, wherein each transit line score depends on a weighted number of transit stops servicing the respective transit line, wherein the weight for a given transit stop is given by its transit stop score, and on a weighted number of transit lines that interconnect with the respective transit line, wherein the weight for an interconnecting transit line is given by the transit line score of the interconnecting transit line.

An aspect of the disclosure includes wherein each transit stop score depends on a weighted number of transit lines servicing the transit stop, wherein the weight for a given transit line is given by its transit line score. Another aspect of the disclosure includes wherein each transit stop score further depends on one or more scores for points of interest (POI) that are less than a predetermined distance from the transit stop, wherein each POI score is based on at a geographical distance between the location of the POI and the transit stop. A further aspect of the disclosure includes wherein each transit stop ranking score further depends on a population center score for a population center that is closest to the transit stop, where the population center score depends on the population of the population center and a geographical distance between the location of the population center and the transit stop. Another aspect of the disclosure includes wherein each transit line score further depends on a travel distance of the respective transit line.

According to another embodiment of the disclosure, a system for iteratively scoring transit stops and transit lines is provided. The system includes one or more memories storing executable instructions and one or more processors configured to execute the executable instructions. The processor is configured to cause the system to initialize a set of transit stop scores, wherein each transit stop score in the set depends on a number of departures from the transit stop over a period of time and a set of transit line scores for a respective set of transit lines that service the transit line stop. The processor is also configured to cause the system to initialize a set of transit line scores, wherein each transit line score in the set depends on a number of trips on the transit line over the period of time, and a set of transit stop scores for a respective set of transit stops that are serviced by the transit line. The processor is further configured to cause the system to iteratively refine the set of transit stop scores and the set of transit line scores until for any given transit stop score or transit line score at least one of a maximum number of iterations has occurred or a change in the given transit stop score or transit line score between successive iterations is less than a threshold, wherein each transit line score depends on a weighted number of transit stops servicing the respective transit line, wherein the weight for a given transit stop is given by its transit stop score, and on a weighted number of transit lines that interconnect with the respective transit line, wherein the weight for an interconnecting transit line is given by the transit line score of the interconnecting transit line.

An aspect of the disclosure includes wherein each transit stop score depends on a weighted number of transit lines servicing the transit stop, wherein the weight for a given transit line is given by its transit line score. Another aspect of the disclosure includes wherein each transit stop score further depends on one or more scores for points of interest (POI) that are less than a predetermined distance from the transit stop, wherein each POI score is based on at a geographical distance between the location of the POI and the transit stop. A further aspect of the disclosure includes wherein each transit stop ranking score further depends on a population center score for a population center that is closest to the transit stop, where the population center score depends on the population of the population center and a geographical distance between the location of the population center and the transit stop. Another aspect of the disclosure includes wherein each transit line score further depends on a travel distance of the respective transit line.

According to another embodiment of the disclosure, non-transitory machine-readable storage medium comprising machine readable instructions for causing a processor to execute a method for iteratively scoring transit stops and transit lines is provided. The method includes initializing a set of transit stop scores, wherein each transit stop score in the set depends on a number of departures from the transit stop over a period of time and a set of transit line scores for a respective set of transit lines that service the transit line stop. The method also includes initializing a set of transit line scores, wherein each transit line score in the set depends on a number of trips on the transit line over the period of time, and a set of transit stop scores for a respective set of transit stops that are serviced by the transit line. The method further includes iteratively refining the set of transit stop scores and the set of transit line scores until for any given transit stop score or transit line score at least one of a maximum number of iterations has occurred or a change in the given transit stop score or transit line score between successive iterations is less than a threshold, wherein each transit line score depends on a weighted number of transit stops servicing the respective transit line, wherein the weight for a given transit stop is given by its transit stop score, and on a weighted number of transit lines that interconnect with the respective transit line, wherein the weight for an interconnecting transit line is given by the transit line score of the interconnecting transit line.

An aspect of the disclosure includes wherein each transit stop score depends on a weighted number of transit lines servicing the transit stop, wherein the weight for a given transit line is given by its transit line score. Another aspect of the disclosure includes wherein each transit stop score further depends on one or more scores for points of interest (POI) that are less than a predetermined distance from the transit stop, wherein each POI score is based on at a geographical distance between the location of the POI and the transit stop. A further aspect of the disclosure includes wherein each transit stop ranking score further depends on a population center score for a population center that is closest to the transit stop, where the population center score depends on the population of the population center and a geographical distance between the location of the population center and the transit stop. Another aspect of the disclosure includes wherein each transit line score further depends on a travel distance of the respective transit line.

### BRIEF DESCRIPTION OF THE DRAWINGS

The accompanying drawings, which are included to provide further understanding and are incorporated in and constitute a part of this specification, illustrate disclosed embodiments and together with the description serve to explain the principles of the disclosed embodiments. In the drawings:
FIG. 1 illustrates an example of a transit map application on a client device using default transit scores;
FIG. 2 illustrates an example of a transit map application on a client device using refined transit scores;
FIG. 3 illustrates an architecture for scoring transit stops/lines and providing transit stop/line information to a device;
FIG. 4 is a block diagram illustrating a client and server from the architecture of FIG. 3 according to certain aspects of the disclosure;
FIG. 5 illustrates a process for scoring transit stops using a server of FIG. 4;
FIG. 6 illustrates a process for ranking transit stops using a server of FIG. 4;
FIG. 7 illustrates another process for ranking transit stops using a server of FIG. 4;
FIG. 8 illustrates a process for scoring transit lines using a server of FIG. 4;
FIG. 9 illustrates a process for ranking transit lines using a server of FIG. 4;
FIG. 10 illustrates another process for ranking transit lines using a server of FIG. 4;
FIG. 11 illustrates an iterative process for ranking transit stops and transit lines using a server of FIG. 4;
FIG. 12 is a block diagram illustrating a computer system with which the client of FIG. 4 can be implemented.

### DETAILED DESCRIPTION

In the following detailed description, numerous specific details are set forth to provide a full understanding of the present disclosure. It will be apparent, however, that aspects of the present disclosure may be practiced without some of these specific details. In other instances, certain structures and techniques have not been shown in detail so as not to obscure the subject technology.

A system can provide ranking scores for all transit stops and/or all transit lines within transit systems in a particular geographic area. As used herein, a transit stop is a transit location having at least one form of public transit that stops to allow passengers to get on or off and a transit line is a line serviced by at least one form of public transit vehicle that stops to allow passengers to get on or off. For example, the system can determine a ranking score for every known transit stop in the United States based on criteria relative to the transit stops and/or transit lines that service the transit stops. Similarly, the system can determine a ranking score for every known transit line in the United States based on criteria relative to the transit lines and/or transit stops that are serviced by the transit lines. The initial transit stop and transit line ranking scores can be stored in a transit information database as the baseline ranking scores for each entity.

The system can also use an iterative process in which the initial ranking scores can be determined for one of the transit stops or the transit lines, after which the initial ranking scores of the other of the transit stops and transit lines may be based on the initial ranking scores of the other. For example, the initial ranking scores may be determined for all of the transit stops in Chicago, after which the initial ranking scores for all of the transit lines in Chicago may be determined using criteria including the initial transit stop ranking scores. The iterative process may be refined by continuously recalculating the transit stop ranking scores and the transit line ranking scores, using the previously determined ranking scores of the other transit entity. The iterative process may continue until a set number of iterations have been performed or until the amount of change in the ranking scores drops below a threshold amount, for example.

In one embodiment, transit stop scores and transit line scores are functionally interdependent. In this embodiment, initial values for transit stop scores and transit line scores can be determined. These initial values can be input to an iterative process that is used to refine both the transit stop scores and the transit line scores. For a given transit stop or transit line, the iterative process can terminate when the change to that transit stop's score or that transit line's score between iterations is less than a threshold, or when the number of iterations exceeds a predetermined number.

The resulting ranking scores for both the transit stops and transit lines can be stored in a transit system database. The stored transit stop and transit line ranking scores may be considered to be default ranking scores. The transit system database may be used as the basis for providing transit stop and transit line information to transit system applications (e.g., mapping applications). For example, the default scores for transit stops in Manhattan may show that there are 1,000 transit stops in Manhattan with the highest ranked transit stop being Grand Central Station. A list of the 1,000 transit stops in Manhattan may then be provided to a mapping application in ranked order (e.g., Grand Central Station listed first, then the next highest ranked transit stop and so on).

However, a list of so many transit stops would be overwhelming to a user trying to determine the best mode of public transportation to use while in Manhattan. Therefore, the system can filter the default transit stop ranking scores to provide a manageable number of transit options to present to a user. For example, the system can filter the transit stop list to present only the 10 transit stops in Manhattan with the highest default ranking scores.

To provide even more useful information to the user, however, the default transit stop scores can be adjusted based upon user specific criteria, such as a user query regarding public transportation near a specific location or the user's current location. For example, the top 10 default transit stops in Manhattan may all be located within blocks of each other in the downtown business district, yet for a user on the far North end of Manhattan the transit stations in the downtown business district may not be relevant. Therefore, the system can adjust the default transit stop scores, and filter or reorder the list of transit stops provided to the user based on the user's actual location, such as based on the Global Positioning System (GPS) signal from the user's mobile device. The user on the far north end of Manhattan may then receive a list of the 10 highest ranked transit stops nearest to the user's current location, for example.

The system may provide even further refinement based on the origination and destination points of a user's travel agenda. For example, the user may submit a query regarding transit options going from the far north end of Manhattan to the Times Square neighborhood in Manhattan. Some of the top 10 transit stops from the previously determined list based on the user's current location of the far north side of Manhattan may not connect to any transit lines that service Times Square, while other transit stops not in the previous top 10 may have direct express transit options to Times Square, for example. Thus, by adjusting the default transit stop scores to account for both the origin and destination, the system can filter or reorder the priority of the listing to provide the 10 highest ranked transit stops based on the user's origination in the far north side and desire to take a transit line to Times Square.

Various combinations of the ranking, filtering and prioritizing transit stops and transit lines are contemplated. For example, a user may bring up a mapping application on the user's smartphone, where the mapping application shows a localized map of the area around the user based on the user's current location. The user may then select a public transportation option or tab in the mapping application, to which the system provides visual indications (e.g., a transit overlay on the map) of the 15 transit stops with the highest ranking scores that are nearest to the user's current location. The user may then select a desired destination, to which the system provides a new transit overlay on the map highlighting the 15 transit stops with the highest ranking scores that are both nearest to the user's current location and most relevant to providing transit to the user's desired destination.

Regardless of how refined the results end up being for the user, the process all begins with an initial ranking of transit stops and/or transit lines. The process of obtaining the initial and/or default ranking scores of transit stops and transit lines will now be discussed.

### Transit Stop Ranking

One approach to ranking transit stops is to determine a score for each transit stop based on the number of departures from the transit stop over a period of time, such as the number of trains departing a train station in a day. Another approach is to use information about vehicle types, such as trains, buses, trams, ferries or planes, to score a transit stop. For example, a particular transit stop may have a high number of departures related to commuter trains, subway trains and buses, thereby receiving a higher score than another transit stop with a low number of departures related to only buses. A combination of both approaches may also be used.

The disclosed system provides a score for a transit stop that can be used to surface information about transit stops to a user. The system can determine and/or store an initial score for transit stops (e.g., a pre-processing phase). Subsequently, the system can use information relevant to a particular user (e.g., user's current location, user query regarding a POI) in combination with the initial transit stop scores to determine refined or personalized transit stop scores that are relevant to the particular user (e.g., a post-processing phase). The system can utilize a variety of information and factors associated with a transit stop or a POI near the transit stop in determining a score for the transit stop. The score can represent a level of importance or relevance in association with a particular user or POI.

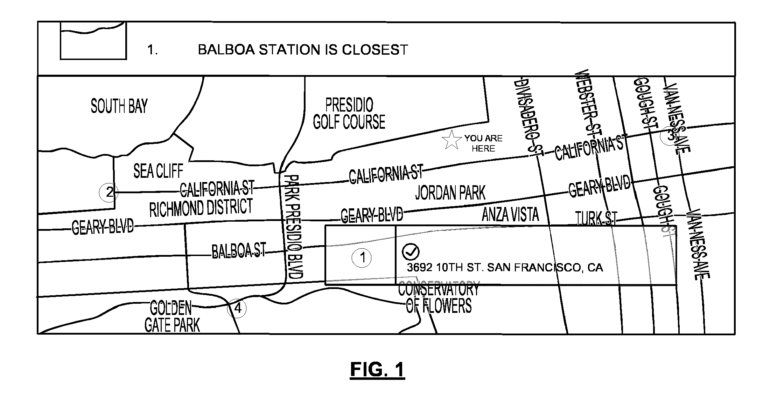

Turning to the drawings, FIG. 1 illustrates a display of a user device for which the user has selected a public transit option on a mapping application. The display highlights the nearest transit stations (e.g., train or subway stations) having the highest adjusted transit station scores based on the user's current location as determined from the GPS location of the user's device. In these and other embodiments, whenever personal data (e.g., location) is used to provide a user with personalized search results, the user's consent to obtain and use the personal information in the manner described can be required. Here, the station shown as number 1 (Balboa Station) is the transit stop with the highest adjusted ranking score given the user's current location. Three other transit stations within the mapped area are highlighted and numbered from 2 to 4 based on a descending order of transit station ranking scores given the user's location. In particular, a transit stop at the corner of Van Ness and California ("Van Ness Station") is ranked third given the user's current location.

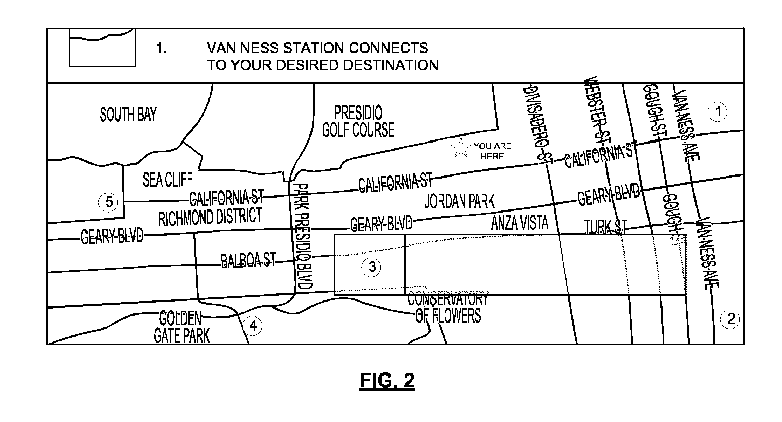

FIG. 2 illustrates the same mapping application, only the ranked order of the highlighted transit stations has changed and a new transit station has been added based on a query by the user regarding travel to a particular destination. In this example, the station highlighted as number 1 (Van Ness Station) is the highest ranked station based on the user's query regarding traveling south to the particular destination, which is conveniently serviced by a train line having stops at stations 1 and 2, and the distance between the station and the user's current location. As noted above, Van Ness Station was previously ranked 3 based solely on user location, but that rank has increased to 1 based on the user's desired destination.

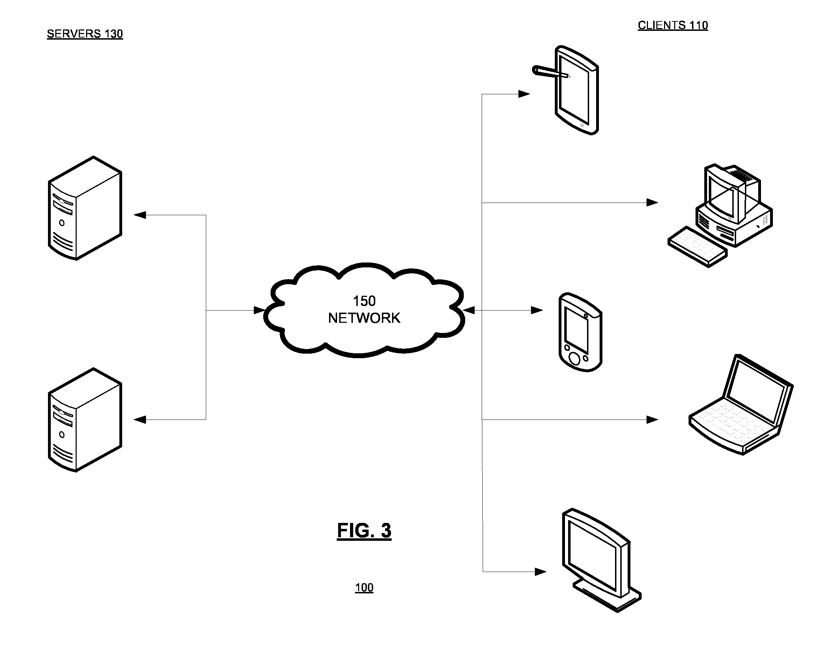

FIG. 3 illustrates an architecture 100 for determining the scores of transit stops and displaying information regarding the transit stops on client devices. The architecture 100 includes servers 130 and clients (e.g., user devices) 110 connected over a network 150.

Each of the clients 110 is configured to run a web browser or other application that provides access to transit stop information. Transit stop information may also include information associated with a transit stop, such as maps, schedules and available amenities or services, for example. The web browser or other application is configured to run on clients 110 that are mobile or non-mobile. The clients 110 can be, for example, desktop computers, laptop computers, mobile devices (e.g., a smartphone, tablet computer, or PDA), set top boxes (e.g., for a television), video game consoles, or any other devices having processor, memory, and communications capabilities.

The transit stop information can be downloaded over the network 150 from one or more servers 130. Multiple servers 130 can also host the data for calculating and/or downloading transit stop information. The servers 130 can be any device having processor, memory, and communications capabilities for calculating transit stop information and/or hosting data related to calculating transit stop information, such as data, signals, factors or formulas. The network 150 can include, for example, any one or more of a personal area network (PAN), a local area network (LAN), a campus area network (CAN), a metropolitan area network (MAN), a wide area network (WAN), a broadband network (BBN), the Internet, and the like. Further, the network 150 can include, but is not limited to, any one or more of the following network topologies, including a bus network, a star network, a ring network, a mesh network, a star-bus network, tree or hierarchical network, and the like.

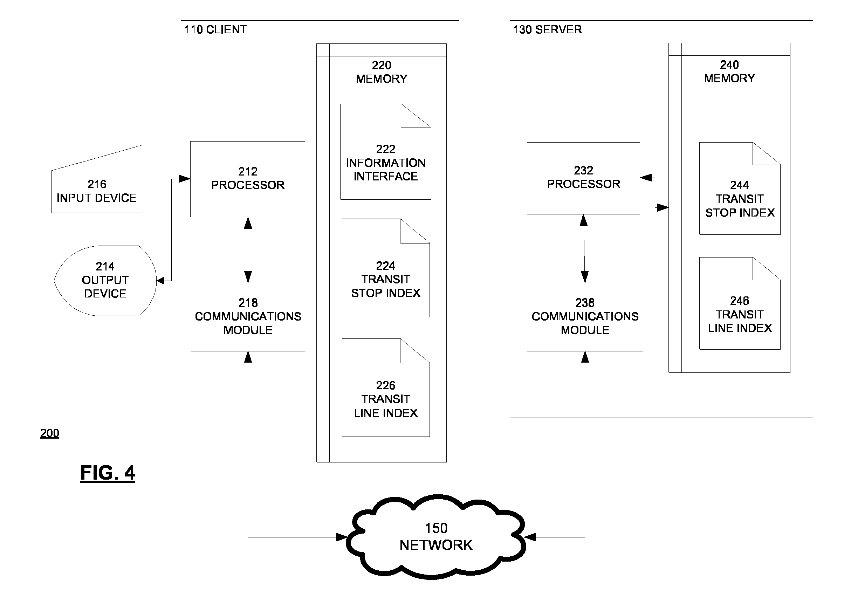

FIG. 4 is a block diagram 200 illustrating server 130 and client 110 in the architecture 100 of FIG. 3 according to certain aspects of the disclosure. The client 110 and the server 130 are connected over the network 150 via client communications module 218 and server communications module 238. The communications modules 218 and 238 are configured to interface with the network 150 to send and receive information, such as data, requests, responses, and commands to other devices on the network. The communications modules 218 and 238 can be, for example, modems or Ethernet cards.

The client 110 includes a client processor 212, the client communications module 218, and a client memory 220 that includes an information interface 222. The client memory 220 may also include a client transit stop index 224 for storing transit stop information and a client transit line index 226 for storing transit line information. The client 110 also includes an output device 214, such as a display, to provide information to the user, and an input device 216, such as a keyboard, touchscreen, or mouse, to receive user inputs. The transit stop information is received from the server 130 over the network 150 using respective communications modules 218 and 238 of the client 110 and server 130. Specifically, the server 130 provides transit stop information to the client 110 in response to a request from the client 110. Alternatively, the client 110 may be configured to perform any or all calculations required to determine a score for a transit stop, such that the server 130 is not required to provide any information at all or is only required to provide signals or factors used in making the calculations, for example.

The server processor 232 of the server 130 is configured to execute instructions, such as instructions physically coded into the server processor 232, instructions read from the server memory 240, or a combination of both. For example, the server processor 232 executes instructions from the server memory 240 to calculate a score for a particular transit stop based on data. The data may be stored in the server memory 240, received from other sources (e.g., other servers, sensors, clients), or a combination of both. For example, data related to the geographical location of a transit stop may be stored in a transit stop index 244, and other data related to a score of the city in which the transit stop is located may be provided by another server 130 or stored in the transit stop index 244. Similarly, data or information related to a transit line may be stored in a transit line index 246. The server processor 232 calculates a score for the transit stop based on the data and provides information related to the transit stop based on the calculated transit stop score to the client 110. Alternatively, the client processor 212 may perform a portion of or all of the calculation, and any or all of the data used in the calculation may be stored in the client memory 220.

The assigned or calculated transit stop scores may be provided directly as numerical values, or in another form, such as graphs or icons that visually represent the scores. A transit stop score may indicate the relative importance of a transit stop. For example, a larger bus station close to the downtown area in a city may have a higher score than a smaller bus station further away from the downtown area of the city, particularly when the user is located downtown. The transit stop scores may be used to identify and or rank transit stops for a user or application. For example, in response to a user query matching several train stations (e.g., "Union Station"), a list of matching train stations sorted by their transit stop scores may be returned to the user.

Different types of data that may be used in determining an initial transit stop score will now be described. The number of departures from a transit stop may be used in determining a transit stop score. The number of departures may be weighted by vehicle type so that the number of departures for different vehicle types are counted differently. Departures via one vehicle type may be weighted higher than departures via another vehicle type for any suitable reason, such as the carrying capacity of the vehicle. For example, a departure of a subway train having a higher carrying capacity than a bus may be weighted higher than a departure of the bus.

The number of lines servicing a particular transit stop may be used to determine a transit stop score. The number of lines may be weighted based on the vehicle type as described above. For example, a commuter train line may be weighted (i.e., counted) higher than a bus line based on the relative capacity of trains versus buses. The weight assigned to a transit line may also be based on the geographic location of the transit stops that the transit line services. For example, a subway line that services the downtown area of a large metropolitan city may be weighted higher than a subway line that services a sparsely populated town.

A point of interest (POI) proximity factor may be used to determine a transit stop score. The POI proximity factor may take into consideration information about POIs that are located within a radius of the transit stop. For a given POI, the POI proximity factor may depend on a distance between the transit stop and the POI, a POI score that indicates the importance of the POI (e.g., the Eiffel tower may have a high POI score because it is so well known), and an edit distance between the POI name and the transit stop name (e.g., the "Piccadilly Circus" area of London and the "Piccadilly Circus Subway Station"). In some embodiments, the POI proximity factor must exceed a POI threshold value to influence a transit stop score. In general, the POI proximity factor gets larger when the POI score gets larger, the distance between the POI and the transit stop gets smaller, and the edit distance between the POI and transit stop names gets smaller.

The transit stop score can also be based on a population center factor. A population center may include any type of localized populated designation, such as a town, a village or a city. The population center factor may be based on a population center score (e.g., a rank of the population center which may depend on its population), the distance of the transit stop to the center of the population center, and an edit distance between the population center name and the transit stop name. In general, the population center factor gets larger when the population center score gets larger, the distance between the center of the population center and the transit stop gets smaller, and the edit distance between the population center name and the transit stop name gets smaller.

The processor 212, 232 selects a transit stop from a listing of multiple transit stops and determines an initial score for the selected transit stop based on one or more of the weighted number of departures and lines servicing the transit stop, the POI proximity factor and the population center factor. The initial transit stop score may indicate the relative importance of the transit stop. The initial transit stop scores may be provided to an application that sorts the stops into a ranked order and either presents the ranked order to a user or presents information related to a particular stop to the user based on the transit stop ranks. For example, the transit stop having the highest initial transit stop score may be the most relevant transit stop to the user, and information regarding that transit stop may be presented to the user. The initial transit stop score for each of a plurality of transit stops in a geographic region may also be stored in the transit stop listings for the geographic region.

The initial transit stop scores may be used as the basis for providing a personalized transit stop score and/or response to a particular user. Information relevant to the particular user and the initial transit stop scores can be utilized to determine a refined transit stop score for each transit stop. The refined transit stop scores may be used to rank and sort the transit stops into a refined ranked order (e.g., a personalized list that can be presented to the user), or to present information related to a particular transit stop (e.g., a highest ranked transit stop) to the user.

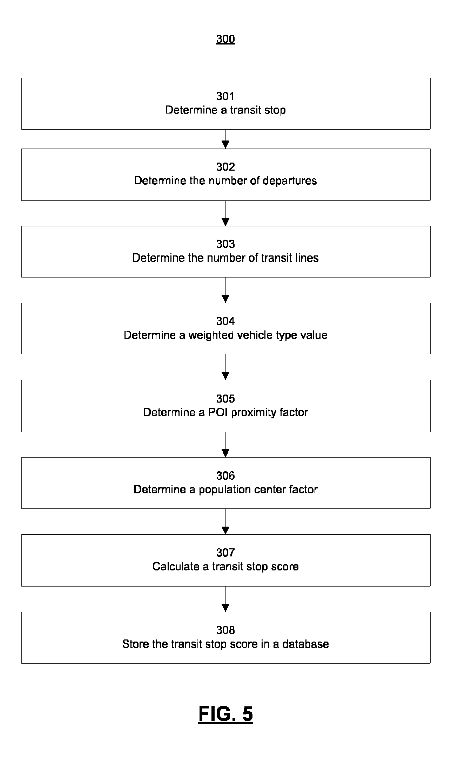

FIG. 5 illustrates a process 300 using the server 130 of FIG. 4 for ranking a transit stop. In step 301, a transit stop is identified or determined. For example, the transit stop may be determined or chosen from a list of transit stops in a particular geographic area or the transit stop may be identified as the next closest transit stop that has not yet been ranked. The identified transit stop can be one of a number of transit stops in a particular geographic area or areas. In step 302, the number of departures from the transit stop is identified or determined. The number of departures may be broken down by vehicle type, such as a train, a bus, a tram or a ferry, for example. In step 303, the number of transit lines associated with the transit stop is identified or determined. The number of transit lines may be broken down by vehicle type.

For example, a transit stop may be serviced by any combination of train lines, subway lines, tram lines, trolley lines or bus lines.

In step 304, a weighted vehicle type value is determined. The weighted vehicle type value may be the weighted value of the number of departures and the number of transit lines servicing the transit stop. The weights may be determined or calculated based on the type of transit vehicle or vehicles used by the transit line. The weights may be determined by the carrying capacity of the transit vehicles or by the relative importance of the transit lines. For example, a train may have a higher weight than a bus, and a transit line servicing a downtown area may have a higher weight than a transit line servicing a suburb.

In step 305, a POI proximity factor for the transit stop is determined. The POI proximity factor can be determined from information about POIs that are located within an area around the transit stop. For a given POI, the POI proximity factor may be based on a base rank or score for the POI, the distance between the POI and the transit stop, and the edit distance between the name of the POI and the name of the transit stop. The edit distance will be small when it would take very little or no editing to turn one name into the other, such as a POI name of "Union Square" and a transit stop name of "Union Square Station." The edit distance will be large when it would take a larger amount of editing to transform one name into the other, such as a POI name of "Union Candy Store" and a transit stop name of "Union Square Station."

In general, the proximity factor for a given POI is proportional to the POI score, and inversely proportional to the POI distance and the edit distance. For example, for a given POI, the POI proximity factor may be calculated by dividing the POI score by the POI distance and by the edit distance. The POI proximity factor thus increases as the POI score increases, as the POI distance from the transit stop decreases, and as the edit distance between the POI name and the transit stop name decreases. The overall POI proximity factor for the transit stop may be determined from the POI proximity factors determined for a plurality of POIs that are in a defined area around the transit stop. For example, the POI proximity factor for the transit stop can be determined by adding the proximity factors for the plurality of POIs.

In step 306, a population center factor for the transit stop is determined. The population center factor may be determined or calculated using any combination of a population center score, and a distance between the population center and the transit stop. For example, the population center factor may be determined by dividing the population center score by the distance between the population center and the transit stop. Thus, the population center factor increases as the population center score increases and as the distance between the population center and the transit stop decreases. Further, the population center factor may be determined by combining the population center factors for a plurality of population centers that are in a defined area around the transit stop, for example, by adding them.

In step 307, a transit stop score is determined or calculated based on one or more of the weighted number of departures from the transit stop, the weighted number of transit lines servicing the transit stop, the POI proximity factor, or the population center factor. For example, a transit stop score may be calculated using just one of the elements. Alternatively, a transit stop score may be calculated using all of the elements as that may provide a more accurate or improved score, for example. In step 308, the transit stop score is stored in a database, such as a transit stop ranking database, for example.

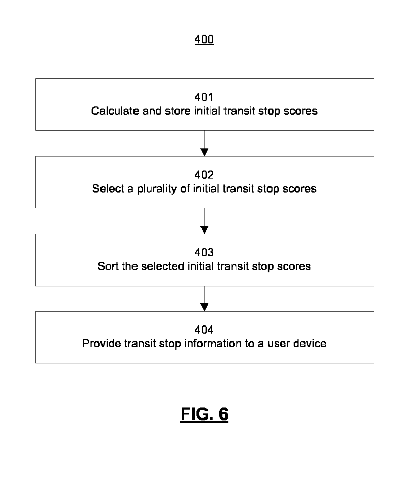

FIG. 6 illustrates a method 400 using the server 130 of FIG. 4 for providing a ranked list of transit stops. In step 401, initial scores for multiple transit stops are calculated and stored in a transit stop listing, for example, as described above in reference to FIG. 5. For example, a city may have 800 known transit stops within the city limits. Initial transit stop scores may be determined for each one of the 800 transit stops by performing steps 301-307 shown in FIG. 5 for each transit stop, after which the 800 initial transit stop scores are stored for further use. In step 402, a number of transit stops from the list may be selected. For example, all 800 transit stops in the current example may be selected for sorting. Alternatively, a subset of the 800 transit stops may be selected for sorting based upon any additional relevant criteria. For example, a user may make a query regarding transit stops near a particular POI such as a stadium in the city and the 20 transit stops nearest to the stadium may be selected for sorting.

In step 403, the selected transit stops are sorted into an initial ranked order of transit stops. The transit stops may be sorted according to their transit stop scores, from the highest initial transit stop score to the lowest initial transit stop score. For example, if all 800 transit stops are sorted, the highest initial transit stop score may be considered the most relevant transit stop for the entire city (e.g., the largest commuter station in the center of the city). Likewise, the 20 transit stops nearest to a particular POI such as a stadium may be sorted, and the transit stop having the highest initial transit stop score may be considered the most relevant transit stop for the stadium (e.g., a subway station right below the stadium).

In step 404, information regarding the selected and sorted transit stops is provided to a user device. The information may be the actual initial ranked order of transit stops (e.g., the sorted list from step 403), together with descriptive information associated with any or all of the transit stops. Alternatively, information regarding a specific transit stop may be sent to the user device. For example, the highest ranked transit stop may be a train station and an interactive map of the area around the train station, a link to the train schedules for the train station and a listing of the services provided at the train station, such as handicapped accessibility, parking and hours of operation may be sent to the user device. Other types of information that can be provided to the user regarding a ranked transit stop may include, but is not limited to, a list of restaurants or stores nearby or in the transit stop building, a price list for the transit options and advertisements.

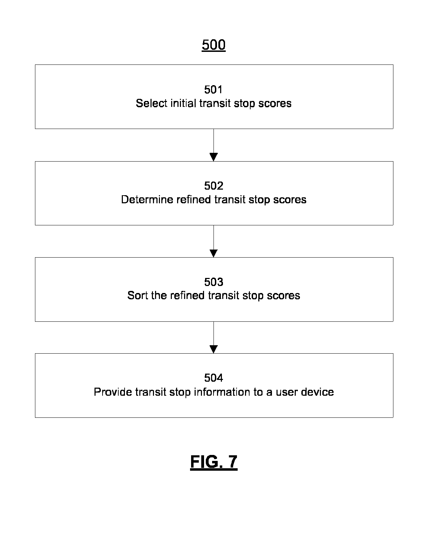

In some embodiments, a more refined or personalized listing of transit stops may be provided to the user as shown in FIG. 7 as process 500. For example, a user may request information for a particular restaurant in a city. The restaurant may be reasonably close to a large commuter station with commuter train, subway and bus service. The restaurant may also be reasonably close to other transit stops within a predetermined area of the restaurant, such as a ferry station, a subway station and a bus stop. The system may use information such as the distance of each transit stop from the restaurant and the transit schedules for lines servicing each of the nearby transit stops to assign a refined score for each transit stop. The system may sort the transit stops using the refined scores and present information regarding the transit stop with the highest refined score to the user's device. For example, the system may rank the subway station as the transit stop with the highest refined score and provide the user's device with a map of the area around the subway station, a description of the subway lines with stops at the subway station, a link to a schedule of the subway trains that stop at this subway station, and advertisements for other restaurants that are located near the subway station.

FIG. 7 illustrates a process 500 using the server 130 of FIG. 4 for providing a refined or personalized ranked list of transit stops. In step 501, multiple transit stops having initial transit stop scores are selected from a list of transit stops in response to a selection criteria. For example, based on a user query about a specific restaurant in the city, the 10 closest transit stops to the restaurant may be selected. The transit stop having the highest initial transit stop score may be a bus stop that is just down the block from the restaurant, while a subway station three blocks away may have a lower initial transit stop score. In step 502, refined transit stop scores are determined for each of the selected transit stops based on the initial transit stop scores and on information relevant to the particular user. Relevant user information may be the geographic location of the user, the date and/or time of day, or the weather, for example. For example, the transit scores for the 10 transit stops closest to the restaurant may be refined based on their initial transit stop scores and the distance between the current location of the user and the nearest stop on the transit line that services the restaurant's transit stop, and/or on the cost of each transportation option based on the user's current location.

In step 503, the refined transit stop scores are sorted. The transit stop having the highest refined score may now be the subway station that is three blocks from the restaurant, because a subway train runs every 15 minutes from a location that is 200 yards from the user's current location to the subway station, whereas a bus only runs once an hour from a location that is 1000 yards from the users current location to the restaurant's bus stop.

In step 504 information regarding one or more transit stops is provided to a user device. The information may be the refined ranked order of transit stops (e.g., the sorted list from step 503) or relevant information about a particular transit stop. For example, since the subway station is now the highest ranked transit stop for this user query, information such as a map of the area between the subway station and the restaurant, a train schedule for trains running from a location near the user's current location and the subway station and hours of operation for the subway station may be provided to the user.

An example will now be described using the processes 300, 400 and 500 of FIGS. 5-7, a server 130, a transit stop index 244, a network 150, a smartphone client 110, and a mobile web browser 222.

In this example, the system ranks transit stops for the metropolitan area of Washington, D.C., for which there may be 500 transit stops in total. The transit stops are a combination of commuter train stations, subway stations, bus stations and ferry stations. In step 301, the server 130 identifies one of the 500 transit stops (e.g., a commuter station two blocks away from the White House). In step 302, the server 130 determines that the commuter station has subway service with 50 subway departures a day and commuter service with 20 metropolitan train departures a day. The server 130 determines that the commuter station has three subway lines and five metropolitan train lines in step 303. In step 304, the server 130 determines a weighted value for each of the three subway lines and five metropolitan train lines. For example, the metropolitan train line having the largest number of train cars is weighted the highest and the subway line having the lowest number of train cars is weighted the lowest. In step 305, the server 130 determines that the commuter station has a relatively high POI proximity factor since it is very close to the White House, and the White House has a high POI score.

In step 306, the server 130 determines the commuter station also has a very high population center factor since Washington, D.C. has a high population center score and the distance between the center of the city and the commuter station is small. In step 307, the server 130 assigns or calculates an initial transit stop score for the commuter station as .97 on a normalized global scale of .1 to 1.0. The server 130 completes steps 301-307 for the other 500 transit stops in the metropolitan area, including a first bus station ten blocks away, a subway station a half mile away and a second bus station a mile away. In this example, the initial transit stop scores are .84 for the first bus station, .79 for the subway station and .61 for the second bus station.

A user subsequently uses a mobile web browser 222 on the user's smartphone 110 to query the network 150 for information related to transit stops in the area of the White House. In step 402, the server 130 selects all transit stops within a one mile radius of the White House, and the server initially selects the four transit stops described above. In step 403, the server 130 sorts the four selected transit stops based on their initial transit stop scores into a ranked order of the commuter station, the first bus station, the subway station and the second bus station, where the order is for transit stops having the highest transit stop score to the lowest transit stop score. The server 130 may send information to the user's smartphone 110 regarding the commuter station, such as an interactive map of the area around the commuter station, a picture of the commuter station, and links to the subway and metropolitan train schedules for the trains that stop at the commuter station.

Alternatively, the server 130 may provide personalized or refined transit stop information by skipping step 404 and selecting the four initial transit stops for further processing in step 501, as shown in FIG. 7. In step 502, the server 130 may determine refined transit stop scores of .87 for the commuter station, .91 for the first bus station, .63 for the subway station and .75 for the second bus station, based on the user's current location and the time of day. For example, the user may be very close to a stop along a bus route that stops at the first bus station, and the next bus from near the user's present location may be due to arrive in the next few minutes. In step 503, the server 130 sorts the transit stops into a ranked order of the first bus station, the commuter station, the second bus station and the subway station, where the order is from transit stops having the highest refined transit stop score to the lowest refined transit stop score. In step 504, the server 130 sends information to the user's smartphone 110 regarding the first bus station, such as an interactive map of the area around the first bus station, a picture of the first bus station, and a link to a real time bus route application showing when the next bus will be arriving at the stop closest to the user's present location. This information may be provided to the user as a refined or personalized listing.

### Transit Line Ranking

One approach to ranking transit lines is to determine a score for each transit line based on the number of trips on the transit line over a period of time, such as the number of trains running the transit line in a day. Another approach is to use information about the number of transit stops serviced by a transit line to score the transit line. For example, a particular transit line may service a large number of train stations or stops, thereby receiving a higher score or weight than another transit line servicing a smaller number of train stations or stops. A combination of both approaches may also be used.

The disclosed system provides a score for a transit line that can be used to surface information about transit lines to a user. The system can determine and/or store an initial score for transit lines (e.g., a pre-processing phase). Subsequently, the system can use information relevant to a particular user (e.g., user's current location, user query regarding a POI) in combination with the initial transit line scores to determine refined or personalized transit line scores that are relevant to the particular user (e.g., a post-processing phase). The system can utilize a variety of information and factors associated with a transit line or a POI near the transit line in determining a score for the transit line. The score can represent a level of importance or relevance in association with a particular user or POI.

Similarly to the process of ranking transit stop scores discussed above, the architecture 100 illustrated in FIG. 3 may be used for determining the scores of transit lines and displaying information regarding the transit lines on client devices 110. As further illustrated in FIG. 4, the server 130, the network 150 and the client 110 may function separately or in combination to provide information related to transit line scores using the same systems, devices and methods discussed above in regards to transit stop scores.

The assigned or calculated transit line scores may be provided directly as numerical values, or in another form, such as a graphs or icons that visually represent the scores, for example. A transit line score may indicate the relative importance of that transit line. For example, a long transit line servicing many transit stops or stations and several other interconnecting transit lines may have a higher score than a shorter transit line servicing a few stations and having no interconnecting transit lines. The transit line scores may be used to identifying and or rank transit lines for a user or application. For example, in response to a user query matching several train lines (e.g., "Red Line"), a list of matching train lines sorted by their transit line scores may be returned to the user.

Different types of data that may be used in determining a transit line score will now be described. The number of trips on the transit line may be used in determining a transit line score. A trip may be an instance in which a particular vehicle (e.g., a subway train) traverses all of the transit stops on the transit line (e.g., departs the first station at one end of the transit line and stops at the last station on the transit line. The number of trips may be determined over a particular length of time, such as over a day or a week.

Since a transit line may be used by different vehicle types, the number of trips may be weighted by vehicle type so that different vehicle types are counted differently. Trips made by one vehicle type may be weighted (counted) higher than trips made by another vehicle type for any suitable reason, such as the carrying capacity of the vehicle. For example, a trip by a commuter train having 20 cars during rush hour may be weighted higher than a trip by the same commuter train consisting of only 10 cars during lunch hour running the same transit line.

The number of stations or transit stops associated with a particular transit line may also be used to determine the transit line score. A transit stop may be a location (e.g., a train station) where the vehicle (e.g., commuter train) stops to let passengers on or off. For example, a subway line may have twenty subway stations from one end to the other. The number of transit stops may be weighted based on the vehicle types that service the transit stops. Thus, a transit stop that is serviced by a commuter train, a subway line, and a bus line may be weighted more than a transit stop that is only serviced by a commuter train.

A number of interconnecting transit lines may be used to determine a transit line score. The number of interconnecting transit lines may include all interconnecting transit lines that are serviced by the same type of vehicle as the first transit line. Transit lines serviced by other types of vehicles may also be included in the number of interconnecting transit lines. For example, a first commuter rail line may interconnect with three other commuter rail lines, all four commuter rail lines being serviced by commuter trains. The first commuter rail line may also interconnect with a subway line that is serviced by subway trains and a bus line that is serviced by buses. A transit line with more interconnections to other transit lines may have a higher weight or rank than a transit line with fewer or no interconnections. Interconnecting lines allow for passengers to transfer from one transit line to another transit line. The count for each interconnecting transit line may be weighted by the type of transit line. For example, an intersecting commuter train line may be weighted (counted) more than an intersecting bus line.

The transit line score can also be based on a travel distance of a transit line. A travel distance may be defined as the physical distance between the endpoints of the transit line. For example, the travel distance of a commuter train line may be the distance (e.g., feet, miles, kilometers) between the first train station from which the commuter train begins passenger operations to the last train station for which the commuter train makes the final passenger stop for a trip on the transit line. In another example, a subway line may have a geometrical shape (e.g., circle or square) for which a subway train completes a loop, where the travel distance is the distance of one complete loop (e.g., the distance around a transit circuit or loop from the starting station back around to the starting station).

The processor 212, 232 selects a transit line from a listing of multiple transit lines and assigns a score for any given transit line based on one or more of the weighted number of trips and stops on the transit line, the number of interconnected transit lines and the travel distance of the transit line. The initial transit line score for the transit line may indicate the relative importance of the transit line. The initial transit line scores may be provided to an application that sorts the lines into a ranked order and either presents the ranked order to a user or presents information related to a particular line to the user based on the transit line ranks. For example, the transit line having the highest initial transit line score may be the most relevant transit line to the user, and information regarding that transit line may be presented to the user. The initial transit line score for each of a plurality of transit lines in a geographic region may also be stored in the transit line listings for the geographic region.

The initial transit line scores may be used as the basis for providing a personalized transit line score and/or response to a particular user. Information relevant to the particular user and the initial transit line scores can be utilized to determine a refined transit line score for each transit line. The refined transit line scores may be used to rank and sort the transit lines into a refined ranked order (e.g., a personalized list that can be presented to the user), or to present information related to a particular transit line (e.g., a highest ranked transit line) to the user.

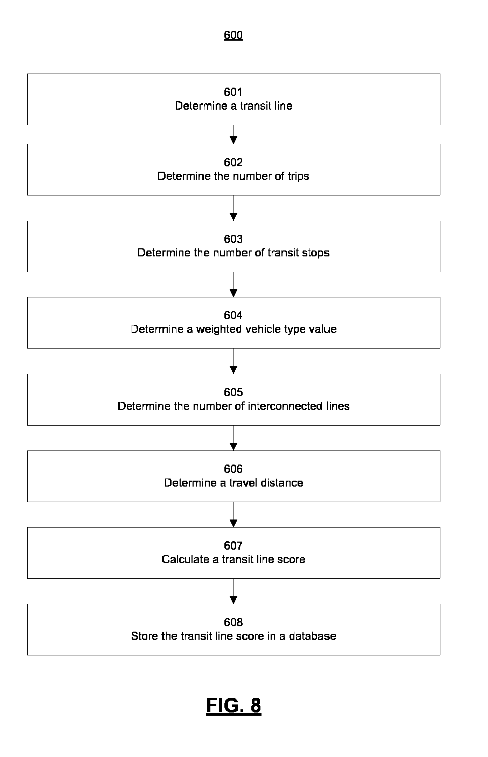

FIG. 8 illustrates a process 600 using the server 130 of FIG. 4 for ranking a transit line. In step 601, a transit line is identified or determined. The identified transit line can be one of a plurality of transit lines in a particular geographic area or areas. In step 602, the number of trips occurring on the transit line over a defined time period is identified or determined. The number of trips may be the number of end-to-end trips made on the transit line in a day and may be broken down by vehicle type, and the counts for the number of trips for different vehicle types may be differently weighted. In step 603, the number of transit stops associated with the transit line is identified or determined. The number of transit stops may be the number of stops on the transit line where passengers can get on or off the public transit vehicle using the transit line. The number of transit stops may be broken down by vehicle type, and the counts for different vehicle types may be differently weighted. For example, a transit line may service a combination of commuter trains, subway trains and elevated trains.

In step 604, a weighted vehicle type value is determined. The weighted vehicle type value may be the weighted value of the number of trips and the weighted value of the number of transit stops serviced by the transit line. The weights may be determined or calculated based on the type of transit vehicle or vehicles used on the transit line. The weights may be determined by the carrying capacity of the transit vehicles or by the relative importance of the transit stops. For example, a commuter train may have a higher weight than a subway train, and a transit stop located in a downtown area may have a higher weight than a transit stop located in a suburb. In step 605, the number of interconnected transit lines is determined. The number of interconnected transit lines may be the number of other transit lines that connect to the first transit line. The interconnection may allow for a passenger on the first transit line to switch over to the interconnected transit line at the point of connection. The number of interconnected transit lines may be weighted based on the type of vehicle used on the interconnecting line. For example, an intersecting subway line may be weighted (counted) more than an intersecting bus line.

In step 606, the travel distance of the transit line is determined. The travel distance is the physical distance between end points on the transit line. In another example, the travel distance may be measured as the physical distance of a round trip on the transit line, such as when a transit line loops around and the transit vehicle passes back through the initial starting point (e.g., a subway line that circles around the downtown of a city). The round trip may also be measured or determined by the round trip distance for a transit vehicle to travel from one end to another and back again (e.g., a straight commuter line for which the commuter train travels from the center of the city out to a far suburb and back to the center of the city).

In step 607, an initial transit line score is determined or calculated based on one or more of the weighted number of trips on the transit line, the weighted number of stops associated with the transit line, the weighted number of interconnected transit lines and the travel distance of the transit line. For example, a transit line score may be calculated using just one of these elements. Alternatively, a transit line score may be calculated using all of the elements as that may provide a more accurate or improved score, for example. In step 608, the transit stop score is stored in a database, such as a transit line ranking database, for example.

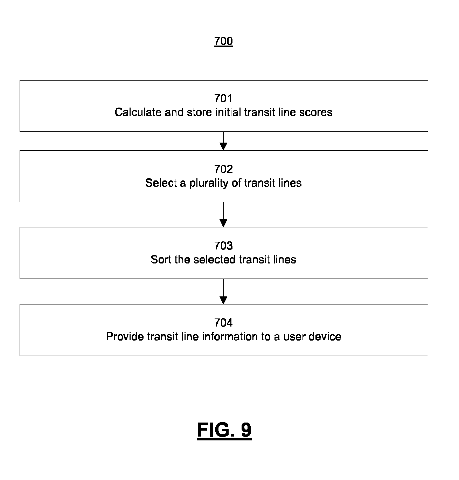

FIG. 9 illustrates a method 700 using the server 130 of FIG. 4 for providing a ranked list of transit lines. In step 701, initial scores for multiple transit lines, each having an initial transit line score, are calculated and stored in a transit line listing. For example, a city may have 40 known transit lines within the city limits. Initial transit line scores may be determined for each one of the 40 transit lines by performing steps 601-608 shown in FIG. 8 for each transit line, after which the 40 initial transit line scores are stored for further use. In step 702, a plurality of transit lines from the list may be selected. For example, all 40 transit lines in the current example may be selected for sorting. Alternatively, a subset of the 40 transit lines may be selected for sorting based upon any additional relevant criteria. For example, a user may make a query regarding transit lines near a particular POI such as a stadium in the city and the 10 transit lines nearest to the stadium may be selected for sorting.

In step 703, the selected transit lines are sorted into an initial ranked order of transit lines. The transit lines may be sorted according to their transit line scores, from the highest initial transit line score to the lowest initial transit line score. For example, if all 40 transit lines are sorted, the highest initial transit line score may be considered the most relevant transit line for the entire city (e.g., the largest commuter train line serving the most train stops in the city). Likewise, the 5 transit lines nearest to a particular POI such as a stadium may be sorted, and the transit line having the highest initial transit line score may be considered the most relevant transit line for the stadium (e.g., a commuter train line connecting to all parts of the city that is within a block of the stadium).

In step 704, information regarding the selected and sorted transit lines is provided to a user device. The information may be the actual initial ranked order of transit lines (e.g., the sorted list from step 703), together with descriptive information associated with any or all of the transit lines. Alternatively, information regarding a specific transit line may be sent to the user device. For example, the highest ranked transit line may be a subway line and an interactive map of the area around the subway line, a link to the subway schedules for the subway line and a listing of the services provided at the nearest subway station on the subway line, such as handicapped accessibility, parking and hours of operation may be sent to the user device. Other types of information that can be provided to the user regarding a ranked transit line may include, but is not limited to, a list of restaurants or stores nearby or in the transit stop buildings on the transit line, a price list for the transit options and advertisements.

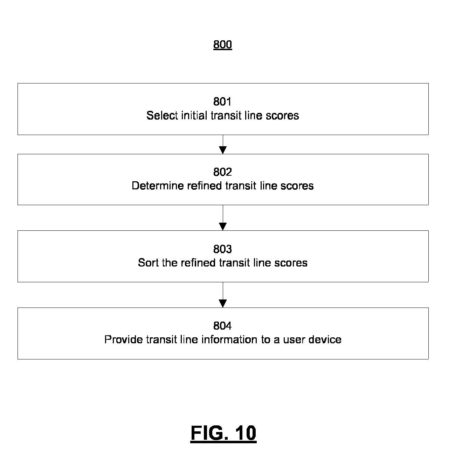

In some embodiments, a more refined or personalized listing of transit lines may be provided to the user as shown in FIG. 10 as process 800. For example, a user may request information for a particular restaurant in a city. The restaurant may be reasonably close to a commuter line. The restaurant may also be reasonably close to other transit lines with transit stops within a predetermined area of the restaurant, such as a first subway line in one direction and a second subway line in another direction. The system may use information such as the distance from the restaurant to the closest transit stop for each transit line and the transit schedules for each transit line to assign a refined score for each transit line. The system may sort the transit lines using the refined scores and present information regarding the transit line with the highest refined score to the user's device. For example, the system may rank the first subway line as the transit line with the highest refined score and provide the user's device with a map of the area around the nearest station of the first subway line, a description of the subway lines that connect with the first subway line, a link to a schedule of the first subway line, and advertisements for other restaurants that are located near the first subway line.

FIG. 10 illustrates a process 800 using the server 130 of FIG. 4 for providing a refined or personalized ranked list of transit lines. In step 801, multiple transit lines having initial transit line scores are selected from a list of transit lines in response to selection criteria. For example, based on a user query about a specific restaurant in the city, the 5 closest transit lines to the restaurant may be selected. The transit line having the highest initial transit line score may be an elevated train having a station that is just down the block from the restaurant, while a subway line having a station three blocks away may have a lower initial transit line score. In step 802, refined transit line scores are determined for each of the selected transit lines based on the initial transit line scores and on information relevant to the particular user. Relevant user information may be the geographic location of the user, the date and/or time of day, or the weather, for example. For example, the transit scores for the 5 transit lines closest to the restaurant may be refined based on their initial transit line scores and the distance between the current location of the user and the nearest stop on each transit line, and/or on the cost of each transportation option based on the user's current location.

In step 803, the refined transit line scores are sorted. The transit line having the highest refined score may now be the subway line with a station that is three blocks from the restaurant, because a subway train runs every 10 minutes from a subway station that is 200 yards from the user's current location to the subway station nearest the restaurant, whereas an elevated train only runs once an hour from a train station that is 1000 yards from the user's current location to elevated train stop nearest the restaurant.

In step 804 information regarding one or more transit lines is provided to a user device. The information may be the refined ranked order of transit lines (e.g., the sorted list from step 803) or relevant information about a particular transit line. For example, since the subway line is now the highest ranked transit line for this user query, information such as a map of the area between the subway line and the restaurant, a subway schedule for subway trains running from a subway station on the subway line that is near the user's current location and hours of operation for the subway line may be provided to the user.

An example will now be described using the processes 600, 700 and 800 of FIGS. 8-10, a server 130, a transit line index 246, a network 150, a smartphone client 110, and a mobile web browser 222.

In this example, the system ranks transit lines for the metropolitan area of Washington, D.C., for which there may be 50 transit lines in total. The transit lines are a combination of commuter train lines, subway lines and elevated train lines. In step 601, the server 130 identifies one of the 50 transit lines (e.g., a commuter line with a station two blocks away from the White House). In step 602, the server 130 determines that the commuter line has service with 45 trips a day. The server 130 determines that the commuter line serves 25 train stations or stops in step 603. In step 604, the server 130 determines a weighted value for each of the 25 train stations. For example, the downtown train station connected to the largest number of transit lines is weighted the highest and the suburban train station in the town with the lowest population is weighted the lowest. In step 605, the server 130 determines that the commuter line has a relatively high number of interconnecting lines, which likely means a rider can reach more areas in the city from that line.

In step 606, the server 130 determines the commuter line also has a very long travel distance since the commuter line goes through the entire city and out to the largest suburbs of the city. In step 607, the server 130 assigns or calculates an initial transit line score for the commuter line as .97 on a normalized global scale of .1 to 1.0. In step 608, the server 130 stores the initial transit line score in a database of a transit ranking application. The server 130 completes steps 601-608 for the other 44 transit commuter lines in the metropolitan area, including a subway line with a station ten blocks away and an elevated trains with a station a half mile away. In this example, the initial transit stop scores are .84 for the subway line and .61 for the elevated train line.

A user subsequently uses a mobile web browser 222 on the user's smartphone 110 to query the network 150 for information related to transit lines in the area of the White House. In step 702, the server 130 selects all transit lines with stations within a one mile radius of the White House, and the server initially selects the three transit lines described above. In step 703, the server 130 sorts the three selected transit lines based on their initial transit line scores into a ranked order of the commuter station, the subway line and the elevated train line, where the order is for transit lines having the highest transit line score to the lowest transit line score. In step 704, the server 130 may send information to the user's smartphone 110 regarding the commuter line, such as an interactive map of the area around the nearest station on the commuter line, a map of the commuter line, and links to the train schedule for the trains that run on the commuter line.

Alternatively, the server 130 may provide personalized or refined transit line information by skipping step 704 and selecting the three initial transit lines for further processing in step 801. In step 802, the server 130 may determine refined transit line scores of .87 for the commuter line, .91 for the subway line and .75 for the elevated train line, based on the user's current location and the time of day. For example, the user may be very close to a stop on the subway line, and the next subway train from near the user's present location may be due to arrive in the next few minutes. In step 803, the server 130 sorts the transit lines into a ranked order of the subway line, the commuter station and the elevated train line, where the order is from transit lines having the highest refined transit line score to the lowest refined transit line score. In step 804, the server 130 sends information to the user's smartphone 110 regarding the subway line, such as an interactive map of the area around the closest subway station on the subway line, a picture of that subway station, and a link to a real time subway application showing when the next subway train will be arriving at the stop. This information may be provided to the user as a refined or personalized listing.

### Iterative Transit Stop and Transit Line Ranking

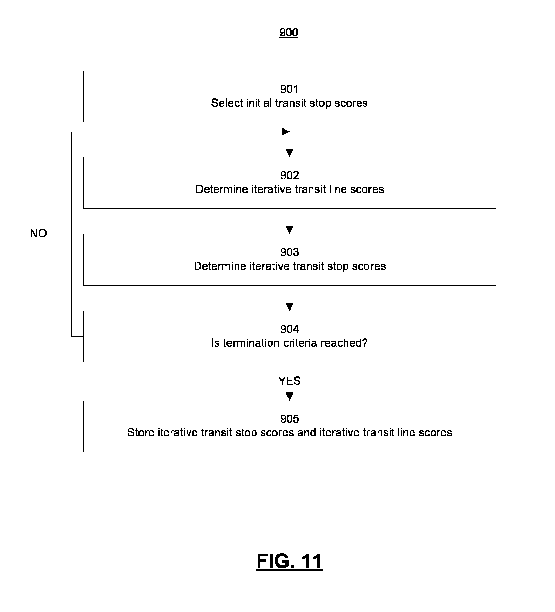

As discussed above, one of the factors used to score a transit stop may be the score of a transit line servicing that transit stop. Similarly, one of the factors used to score a transit line may be the score of a transit stop serviced by that transit line. Thus, transit stop and transit line scores functionally depend upon one another, and may be iteratively calculated in a process such as process 900 using the initially calculated transit stop and transit line scores, as illustrated in FIG. 11. The number of iterations performed can be terminated after a fixed number of iterations (e.g., 100 iterations), or when a change in values between iterations is less than a threshold (e.g., the change in values from one iteration to the next is less than 1%), or when the transit stop or transit line scores converge on an asymptotic value (e.g., there is essentially no change in values from one iteration to the next). The iterative process may be started using a set of initially determined transit stop ranking scores, a set of initially determined transit line ranking scores, or both.

As illustrated in FIG. 11, initially determined transit stop scores and transit line scores are iteratively recalculated to obtain final transit stop and transit line scores. In step 901, a set of initial transit stop scores (e.g., as previously determined by process 300) is selected. For example, it may be desired to improve transit rankings in the Los Angeles area, so initial transit stop scores for all of the transit stops in Los Angeles are selected. In step 902, a set of first iteration transit line scores is determined, e.g., at least in part based on the initial transit stop scores. In step 903, a set of first iteration transit stop scores is determined based on the set of first iteration transit line scores determined in step 902.

Iteration steps 902 and 903 can be repeated many times. For example, after step 903 has been performed the first time, the result is a set of first iteration transit line scores and a set of first iteration transit stop scores. The second time performing step 902, a set of second iteration transit line scores is determined using the set of first iteration transit stop scores obtained in step 903. Similarly, the second time performing step 903, a set of second iteration transit stop scores is determined using the set of second iteration transit line scores obtained in step 902.

The iterative process shown in FIG. 11 can be started by first using either initial transit stop scores or initial transit line scores (not shown). If the iterative process is started in step 901 by determining initial transit stop scores based on initially determined transit line scores as shown, then a new set of transit line scores is determined based on the newly calculated transit stop scores. On the other hand, if the iterative process is started in step 901 by determining transit line scores based on initially determined transit stop scores (not shown), then a new set of transit stop scores is determined based on the newly calculated transit line scores. Iterative values for the transit stop and transit line scores are then determined until a termination criteria is reached in step 904. For example, the termination criteria can be that a predetermined number of iterations have been performed, or that the change in value of the transit line scores and transit stop scores between sequential iterations is less than a threshold value (e.g., 1%). After reaching the termination criteria, the iteratively determined transit stop ranking scores and transit line ranking scores are then stored (e.g., in a transit ranking database) in step 905.

These iteratively determined transit line scores and transit stop scores can be used as default scores to rank transit lines and transit stops. Alternatively, they can be combined with user obtained information (e.g., the user's current location, desired origin, desired destination, cost preferences, transit time preferences, transit type preferences (e.g., bus vs. train)) to obtain refined or reranked transit line and transit stop scores as discussed above. For example, the default transit line and transit stop scores can be recalculated using information about the user's current location so that the adjusted scores for transit lines and transit stops that are close to the user's current location are higher than their default scores, while those for transit lines and transit stops that are far from the user's current location are lower than their default scores.

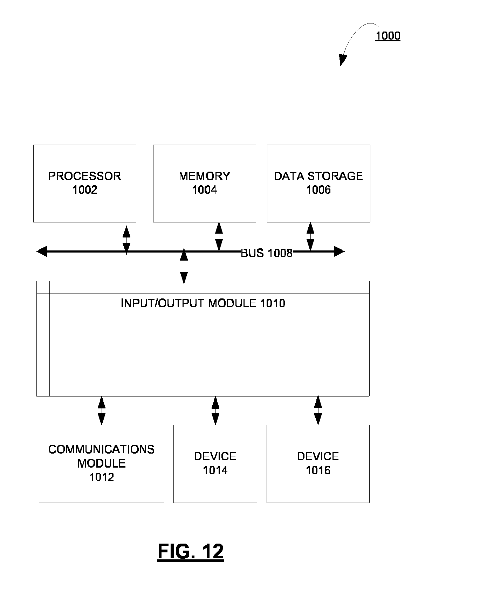

FIG. 12 is a block diagram illustrating an example computer system 1000 with which the client 110 and server 130 of FIG. 4 can be implemented. In certain aspects, the computer system 1000 may be implemented using hardware or a combination of software and hardware, either in a dedicated server, or integrated into another entity, or distributed across multiple entities.

Computer system 1000 (e.g., client 110 and server 130) includes a bus 1008 or other communication mechanism for communicating information, and a processor 1002 (e.g., processor 212 and 232) coupled with bus 1008 for processing information. By way of example, the computer system 1000 may be implemented with one or more processors 1002. Processor 1002 may be a general-purpose microprocessor, a microcontroller, a Digital Signal Processor (DSP), an Application Specific Integrated Circuit (ASIC), a Field Programmable Gate Array (FPGA), a Programmable Logic Device (PLD), a controller, a state machine, gated logic, discrete hardware components, or any other suitable entity that can perform calculations or other manipulations of information.

Computer system 1000 can include, in addition to hardware, code that creates an execution environment for the computer program in question (e.g., code that constitutes processor firmware, a protocol stack, a database management system, an operating system, or a combination of one or more of them) stored in an included memory 1004 (e.g., memory 220 and 240), such as a Random Access Memory (RAM), a flash memory, a Read Only Memory (ROM), a Programmable Read-Only Memory (PROM), an Erasable PROM (EPROM), registers, a hard disk, a removable disk, a CD-ROM, a DVD, or any other suitable storage device, coupled to bus 1008 for storing information and instructions to be executed by processor 1002. The processor 1002 and the memory 1004 can be supplemented by, or incorporated in, special purpose logic circuitry.

The instructions may be stored in the memory 1004 and implemented in one or more computer program products, e.g., one or more modules of computer program instructions encoded on a computer readable medium for execution by, or to control the operation of, the computer system 1000, and according to any well known method , including, but not limited to, computer languages such as data-oriented languages (e.g., SQL, dBase), system languages (e.g., C, Objective-C, C++, Assembly), architectural languages (e.g., Java, .NET), and application languages (e.g., PHP, Ruby, Perl, Python). Instructions may also be implemented in computer languages such as array languages, aspect-oriented languages, assembly languages, authoring languages, command line interface languages, compiled languages, concurrent languages, curly-bracket languages, dataflow languages, data-structured languages, declarative languages, esoteric languages, extension languages, fourth-generation languages, functional languages, interactive mode languages, interpreted languages, iterative languages, list-based languages, little languages, logic-based languages, machine languages, macro languages, metaprogramming languages, multiparadigm languages, numerical analysis, non-English-based languages, object-oriented class-based languages, object-oriented prototype-based languages, off-side rule languages, procedural languages, reflective languages, rule-based languages, scripting languages, stack-based languages, synchronous languages, syntax handling languages, visual languages, wirth languages, and xml-based languages. Memory 1004 may also be used for storing temporary variable or other intermediate information during execution of instructions to be executed by processor 1002.

A computer program as discussed herein does not necessarily correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, subprograms, or portions of code). A computer program can be deployed to be executed on one computer or on multiple computers that are located at one site or distributed across multiple sites and interconnected by a communication network. The processes and logic flows described in this specification can be performed by one or more programmable processors executing one or more computer programs to perform functions by operating on input data and generating output.

Computer system 1000 further includes a data storage device 1006 such as a magnetic disk, solid state disk (SSD) or optical disk, coupled to bus 1008 for storing information and instructions. Computer system 1000 may be coupled via input/output module 1010 to various devices. The input/output module 1010 can be any input/output module. Example input/output modules 1010 include data ports such as USB ports. The input/output module 1010 is configured to connect to a communications module 1012. Example communications modules 1012 (e.g., communications modules 218 and 238) include networking interface cards, such as Ethernet cards and modems. In certain aspects, the input/output module 1010 is configured to connect to a plurality of devices, such as an input device 1014 (e.g., input device 216) and/or an output device 1016 (e.g., output device 214). Example input devices 1014 include a keyboard and a pointing device, e.g., a mouse or a trackball, by which a user can provide input to the computer system 1000. Other kinds of input devices 1014 can be used to provide for interaction with a user as well, such as a tactile input device, visual input device, audio input device, or brain-computer interface device. For example, feedback provided to the user can be any form of sensory feedback (e.g., visual feedback, auditory feedback, or tactile feedback); and input from the user can be received in any form, including acoustic, speech, tactile, or brain wave input. Example output devices 1016 include display devices, such as a cathode ray tube (CRT) or liquid crystal display (LCD) monitor, for displaying information to the user.

According to one aspect of the present disclosure, the client 110 and server 130 can be implemented using a computer system 1000 in response to processor 1002 executing one or more sequences of one or more instructions contained in memory 1004. Such instructions may be read into memory 1004 from another machine-readable medium, such as data storage device 1006. Execution of the sequences of instructions contained in main memory 1004 causes processor 1002 to perform the process steps described herein. One or more processors in a multi-processing arrangement may also be employed to execute the sequences of instructions contained in memory 1004. In alternative aspects, hard-wired circuitry may be used in place of or in combination with software instructions to implement various aspects of the present disclosure. Thus, aspects of the present disclosure are not limited to any specific combination of hardware circuitry and software.

Various aspects of the subject matter described in this specification can be implemented in a computing system that includes a back end component (e.g., as a data server), or that includes a middleware component (e.g., an application server), or that includes a front end component (e.g., a client computer having a graphical user interface or a Web browser) through which a user can interact with an implementation of the subject matter described in this specification, or any combination of one or more such back end, middleware, or front end components. The components of the system can be interconnected by any form or medium of digital data communication (e.g., a communication network). The communication network (e.g., network 150) can include, for example, any one or more of a personal area network (PAN), a local area network (LAN), a campus area network (CAN), a metropolitan area network (MAN), a wide area network (WAN), a broadband network (BBN), the Internet, a cloud and the like. Further, the communication network can include, but is not limited to, for example, any one or more of the following network topologies, including a bus network, a star network, a ring network, a mesh network, a star-bus network, tree or hierarchical network, or the like. The communications modules can be, for example, modems or Ethernet cards.

Computing system 1000 can include clients and servers. A client and server are generally remote from each other and typically interact through a communication network. The relationship of client and server arises by virtue of computer programs running on the respective computers and having a client-server relationship to each other. Computer system 1000 can be, for example, and without limitation, a desktop computer, laptop computer, or tablet computer. Computer system 1000 can also be embedded in another device, for example, and without limitation, a mobile telephone, a personal digital assistant (PDA), a mobile audio player, a Global Positioning System (GPS) receiver, a video game console, and/or a television set top box.

The term "machine-readable storage medium" or "computer readable medium" as used herein refers to any medium or media that participates in providing instructions to processor 1002 for execution. Such a medium may take many forms, including, but not limited to, non-volatile media and volatile media. Non-volatile media include, for example, optical or magnetic disks, such as data storage device 1006. Volatile media include dynamic memory, such as memory 1004. Common forms of machine-readable media include, for example, floppy disk, a flexible disk, hard disk, magnetic tape, any other magnetic medium, a CD-ROM, DVD, any other optical medium, punch cards, paper tape, any other physical medium with patterns of holes, a RAM, a PROM, an EPROM, a FLASH EPROM, any other memory chip or cartridge, or any other medium from which a computer can read. The machine-readable storage medium can be a machine-readable storage device, a machine-readable storage substrate, a memory device, a composition of matter effecting a machine-readable propagated signal, or a combination of one or more of them.

Systems, methods, applications, and machine-readable storage media for scoring and ranking transit stops have been described. While this specification contains many specifics, these should not be construed as limitations on the scope of what may be claimed, but rather as descriptions of particular implementations of the subject matter. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the aspects described above should not be understood as requiring such separation in all aspects, and it should be understood that the described program components and systems can generally be integrated together in a single software product or packaged into multiple software products.

The subject matter of this specification has been described in terms of particular aspects, but other aspects can be implemented and are within the scope of the following claims. For example, the actions recited in the claims can be performed in a different order and still achieve desirable results. As one example, the processes depicted in the accompanying figures do not necessarily require the particular order shown, or sequential order, to achieve desirable results. In certain implementations, multitasking and parallel processing may be advantageous. Other variations are within the scope of the following clauses.
1. A computer-implemented method for iteratively scoring transit stops and transit lines, the method comprising:
   initializing a set of transit stop scores, wherein each transit stop score in the set depends on a number of departures from the transit stop over a period of time and a set of transit line scores for a respective set of transit lines that service the transit line stop;
   initializing a set of transit line scores, wherein each transit line score in the set depends on a number of trips on the transit line over the period of time, and a set of transit stop scores for a respective set of transit stops that are serviced by the transit line; and
   iteratively refining, by a processor, the set of transit stop scores and the set of transit line scores until for any given transit stop score or transit line score at least one of a maximum number of iterations has occurred or a change in the given transit stop score or transit line score between successive iterations is less than a threshold,
   wherein each transit line score depends on a weighted number of transit stops servicing the respective transit line, wherein the weight for a given transit stop is given by its transit stop score, and on a weighted number of transit lines that interconnect with the respective transit line, wherein the weight for an interconnecting transit line is given by the transit line score of the interconnecting transit line.
2. The computer-implemented method of Clause 1, wherein each transit stop score depends on a weighted number of transit lines servicing the transit stop, wherein the weight for a given transit line is given by its transit line score.
3. The computer-implemented method of Clause 2, wherein each transit stop score further depends on one or more scores for points of interest (POI) that are less than a predetermined distance from the transit stop, wherein each POI score is based on at a geographical distance between the location of the POI and the transit stop.
4. The computer-implemented method of Clause 2, wherein each transit stop ranking score further depends on a population center score for a population center that is closest to the transit stop, where the population center score depends on the population of the population center and a geographical distance between the location of the population center and the transit stop.
5. The computer-implemented method of Clause 1, wherein each transit line score further depends on a travel distance of the respective transit line.
6. A system for iteratively scoring transit stops and transit lines, the system comprising:
   one or more memories storing executable instructions; and
   one or more processors configured to execute the executable instructions, causing the system to:
      initialize a set of transit stop scores, wherein each transit stop score in the set depends on a number of departures from the transit stop over a period of time and a set of transit line scores for a respective set of transit lines that service the transit line stop;
      initialize a set of transit line scores, wherein each transit line score in the set depends on a number of trips on the transit line over the period of time, and a set of transit stop scores for a respective set of transit stops that are serviced by the transit line; and
      iteratively refine the set of transit stop scores and the set of transit line scores until for any given transit stop score or transit line score at least one of a maximum number of iterations has occurred or a change in the given transit stop score or transit line score between successive iterations is less than a threshold,
      wherein each transit line score depends on a weighted number of transit stops servicing the respective transit line, wherein the weight for a given transit stop is given by its transit stop score, and on a weighted number of transit lines that interconnect with the respective transit line, wherein the weight for an interconnecting transit line is given by the transit line score of the interconnecting transit line.
7. The system of Clause 6, wherein each transit stop score depends on a weighted number of transit lines servicing the transit stop, wherein the weight for a given transit line is given by its transit line score.
8. The system of Clause 7, wherein each transit stop score further depends on one or more scores for points of interest (POI) that are less than a predetermined distance from the transit stop, wherein each POI score is based on at a geographical distance between the location of the POI and the transit stop.
9. The system of Clause 7, wherein each transit stop ranking score further depends on a population center score for a population center that is closest to the transit stop, where the population center score depends on the population of the population center and a geographical distance between the location of the population center and the transit stop.
10. The system of Clause 6, wherein each transit line score further depends on a travel distance of the respective transit line.
11. A non-transitory machine-readable storage medium comprising machine readable instructions for causing a processor to execute a method for iteratively scoring transit stops and transit lines, the method comprising:
   initializing a set of transit stop scores, wherein each transit stop score in the set depends on a number of departures from the transit stop over a period of time and a set of transit line scores for a respective set of transit lines that service the transit line stop;
   initializing a set of transit line scores, wherein each transit line score in the set depends on a number of trips on the transit line over the period of time, and a set of transit stop scores for a respective set of transit stops that are serviced by the transit line; and
   iteratively refining the set of transit stop scores and the set of transit line scores until for any given transit stop score or transit line score at least one of a maximum number of iterations has occurred or a change in the given transit stop score or transit line score between successive iterations is less than a threshold,
   wherein each transit line score depends on a weighted number of transit stops servicing the respective transit line, wherein the weight for a given transit stop is given by its transit stop score, and on a weighted number of transit lines that interconnect with the respective transit line, wherein the weight for an interconnecting transit line is given by the transit line score of the interconnecting transit line.
12. The non-transitory machine-readable storage medium of Clause 11, wherein each transit stop score depends on a weighted number of transit lines servicing the transit stop, wherein the weight for a given transit line is given by its transit line score.
13. The non-transitory machine-readable storage medium of Clause 12, wherein each transit stop score further depends on one or more scores for points of interest (POI) that are less than a predetermined distance from the transit stop, wherein each POI score is based on at a geographical distance between the location of the POI and the transit stop.
14. The non-transitory machine-readable storage medium of Clause 12, wherein each transit stop ranking score further depends on a population center score for a population center that is closest to the transit stop, where the population center score depends on the population of the population center and a geographical distance between the location of the population center and the transit stop.
15. The non-transitory machine-readable storage medium of Clause 11, wherein each transit line score further depends on a travel distance of the respective transit line.

These and other implementations are within the scope of the following claims.

## Claims

1. A computer-implemented method for iteratively scoring transit stops and transit lines, the method comprising:
initializing a set of transit stop scores, wherein each transit stop score in the set depends on a number of departures from the transit stop over a period of time and a set of transit line scores for a respective set of transit lines that service the transit line stop;
initializing a set of transit line scores, wherein each transit line score in the set depends on a number of trips on the transit line over the period of time, and a set of transit stop scores for a respective set of transit stops that are serviced by the transit line; and
iteratively refining, by a processor, the set of transit stop scores and the set of transit line scores until for any given transit stop score or transit line score at least one of a maximum number of iterations has occurred or a change in the given transit stop score or transit line score between successive iterations is less than a threshold,
wherein each transit line score depends on a weighted number of transit stops servicing the respective transit line, wherein the weight for a given transit stop is given by its transit stop score, and on a weighted number of transit lines that interconnect with the respective transit line, wherein the weight for an interconnecting transit line is given by the transit line score of the interconnecting transit line.

2. The computer-implemented method Claim 1, wherein each transit stop score depends on a weighted number of transit lines servicing the transit stop, wherein the weight for a given transit line is given by its transit line score.

3. The computer-implemented method of one of the previous Claims, wherein each transit stop score further depends on one or more scores for points of interest (POI) that are less than a predetermined distance from the transit stop, wherein each POI score is based on at a geographical distance between the location of the POI and the transit stop.

4. The computer-implemented method of the previous Claims, wherein each transit stop ranking score further depends on a population center score for a population center that is closest to the transit stop, where the population center score depends on the population of the population center and a geographical distance between the location of the population center and the transit stop.

5. The computer-implemented method of one of the previous Claims, wherein each transit line score further depends on a travel distance of the respective transit line.

6. A system for iteratively scoring transit stops and transit lines, the system comprising:
one or more memories storing executable instructions; and
one or more processors configured to execute the executable instructions, causing the system to:
initialize a set of transit stop scores, wherein each transit stop score in the set depends on a number of departures from the transit stop over a period of time and a set of transit line scores for a respective set of transit lines that service the transit line stop;
initialize a set of transit line scores, wherein each transit line score in the set depends on a number of trips on the transit line over the period of time, and a set of transit stop scores for a respective set of transit stops that are serviced by the transit line; and
iteratively refine the set of transit stop scores and the set of transit line scores until for any given transit stop score or transit line score at least one of a maximum number of iterations has occurred or a change in the given transit stop score or transit line score between successive iterations is less than a threshold,
wherein each transit line score depends on a weighted number of transit stops servicing the respective transit line, wherein the weight for a given transit stop is given by its transit stop score, and on a weighted number of transit lines that interconnect with the respective transit line, wherein the weight for an interconnecting transit line is given by the transit line score of the interconnecting transit line.

7. The system of Claim 6, wherein each transit stop score depends on a weighted number of transit lines servicing the transit stop, wherein the weight for a given transit line is given by its transit line score.

8. The system of one of Claims 6 or 7, wherein each transit stop score further depends on one or more scores for points of interest (POI) that are less than a predetermined distance from the transit stop, wherein each POI score is based on at a geographical distance between the location of the POI and the transit stop.

9. The system of one of Claims 6 to 8, wherein each transit stop ranking score further depends on a population center score for a population center that is closest to the transit stop, where the population center score depends on the population of the population center and a geographical distance between the location of the population center and the transit stop.

10. The system of one of Claims 6 to 9, wherein each transit line score further depends on a travel distance of the respective transit line.

11. A non-transitory machine-readable storage medium comprising machine readable instructions for causing a processor to execute a method for iteratively scoring transit stops and transit lines, the method comprising:
initializing a set of transit stop scores, wherein each transit stop score in the set depends on a number of departures from the transit stop over a period of time and a set of transit line scores for a respective set of transit lines that service the transit line stop;
initializing a set of transit line scores, wherein each transit line score in the set depends on a number of trips on the transit line over the period of time, and a set of transit stop scores for a respective set of transit stops that are serviced by the transit line; and
iteratively refining the set of transit stop scores and the set of transit line scores until for any given transit stop score or transit line score at least one of a maximum number of iterations has occurred or a change in the given transit stop score or transit line score between successive iterations is less than a threshold,
wherein each transit line score depends on a weighted number of transit stops servicing the respective transit line, wherein the weight for a given transit stop is given by its transit stop score, and on a weighted number of transit lines that interconnect with the respective transit line, wherein the weight for an interconnecting transit line is given by the transit line score of the interconnecting transit line.

12. The non-transitory machine-readable storage medium of Claim 11, wherein each transit stop score depends on a weighted number of transit lines servicing the transit stop, wherein the weight for a given transit line is given by its transit line score.

13. The non-transitory machine-readable storage medium of one of Claims 11 or 12, wherein each transit stop score further depends on one or more scores for points of interest (POI) that are less than a predetermined distance from the transit stop, wherein each POI score is based on at a geographical distance between the location of the POI and the transit stop.

14. The non-transitory machine-readable storage medium of one of Claims 11 to 13, wherein each transit stop ranking score further depends on a population center score for a population center that is closest to the transit stop, where the population center score depends on the population of the population center and a geographical distance between the location of the population center and the transit stop.

15. The non-transitory machine-readable storage medium of one of Claims 11 to 14, wherein each transit line score further depends on a travel distance of the respective transit line.
